# EUROPÄISCHE PATENTSCHRIFT

(11) **EP 2 903 775 B1**
(45) Veröffentlichungstag und Bekanntmachung des Hinweises auf die Patenterteilung: **15.03.2017**
(21) Anmeldenummer: 14715273.0
(22) Anmeldetag: 03.04.2014
(51) Int. Cl.: B23K 20/10, B29C 65/00

(54) **ULTRASCHALLSCHWEISSVORRICHTUNG**
ULTRASONIC WELDING DEVICE
APPAREIL DE SOUDAGE PAR ULTRASONS

(30) Priorität: 17.04.2013 DE 102013103887
(43) Veröffentlichungstag der Anmeldung: 12.08.2015
(73) Patentinhaber: Schunk Sonosystems GmbH, 35435 Wettenberg (DE)
(72) Erfinder: STROH, Heiko, 35435 Wettenberg (DE); ZIESLER, Alexander, 63843 Niedernberg (DE); WAGNER, Peter, 35435 Wettenberg (DE); KOC, Sinan, 35325 Mücke (DE); STROH, Dieter, 35435 Wettenberg (DE)
(74) Vertreter: Stoffregen, Hans-Herbert
(86) Internationale Anmeldenummer: PCT/EP2014/056654
(87) Internationale Veröffentlichungsnummer: WO 2014/170131

(56) Entgegenhaltungen:
- JP-A- 2002 343 831
- US-B1- 6 786 384

## Beschreibung

Die Erfindung bezieht sich auf eine Ultraschallschweißvorrichtung nach dem Oberbegriff des Anspruchs 1 (siehe US-A-6 786 384).

Eine entsprechende Vorrichtung ist der DE 198 59 355 C2 zu entnehmen. Die Lagerung nimmt sowohl radiale als auch axiale Kräfte als auch Biege- und Torsionsmomente auf. Die Lagerung umfasst dabei einen im Abstand von λ/4 zu dem Sonotrodenkopf, in dessen Bereich sich die Schweiß fläche befindet, einen radial abragenden ersten Abschnitt auf, der seinerseits in einen in Längsrichtung der Sonotrode und zu dieser beabstandet verlaufenden zweiten Abschnitt übergeht.

Nach der DE 35 08 122 C2 ist eine Sonotrode einer Ultraschallschweißvorrichtung über eine Vielzahl von senkrecht zur Sonotrodenlängsachse ausgehenden Stiftschrauben punktuell abgestützt.

Der DE 10 2005 063 230 B3 ist eine Vorrichtung zum Ultraschallbearbeiten eines Werkstücks zu entnehmen. Dabei ist eine Sonotrode mit zwei Boostern verbunden, über die der die Sonotrode und die Booster umfassende Schwinger gelagert wird. Hierzu werden die Booster von einem Rohrstück oder einer Hülse umgeben, die mit den Boostern mittels einer Presspassung oder einer Verschraubung verbunden sind.

Vorbekannte Anordnungen zum Lagern eines Schwingers einer Ultraschallschweißvorrichtung bedürfen aufwendiger Justierungen, um die Sonotrode axial und radial auszurichten, um reproduzierbar Schweißprozesse hoher Güte durchführen zu können.

Der vorliegenden Erfindung liegt die Aufgabe zugrunde, eine Ultraschallschweißvorrichtung zuvor beschriebener Art so weiterzubilden, dass mit konstruktiv einfachen Maßnahmen sowohl eine radiale als auch eine axiale Ausrichtung der Sonotrode möglich ist, ohne dass aufwendige Montagemaßnahmen erforderlich sind.

Erfindungsgemäß wird die Aufgabe durch eine Ultraschallschweißvorrichtung gemäß Anspruch 1 gelöst.

Durch die erfindungsgemäße Lehre erfolgt eine radiale Ausrichtung der Sonotrode dadurch, dass diese über einen dem Querschenkel zugeordneten flächigen Abschnitt auf dem Querschenkel flächig abgestützt ist. Abweichend vom Stand der Technik erfolgt keine punktförmige sondern eine flächige Lagerung.

Die axiale Ausrichtung erfolgt dadurch, dass die Sonotrode mit einem Abschnitt an zumindest einer der Seitenschenkel des Vorsprungs anliegt, wobei insbesondere gleichfalls eine flächige Abstützung erfolgt. In Bezug auf den verbleibenden Seitenschenkel kann die Sonotrode zu diesem beabstandet sein.

Des Weiteren ist vorgesehen, dass die erste Lagerung eine quer zum Querschenkel und in Sonotrodenlängsrichtung verlaufende Abstützung umfasst, gegen die die Sonotrode über eine auf diese einwirkende Kraft drückbar ist.

Die auf die Sonotrode in Richtung der Abstützung wirkende Kraft kann über ein Druckelement wie eine Schraube hervorgerufen werden, wobei das Druckelement vom Gehäuse bzw. Maschinenkörper der Ultraschallschweißvorrichtung ausgehen kann.

Erfindungsgemäß erfolgt mit konstruktiv einfachen Maßnahmen eine flächige Abstützung der Sonotrode im Schwingungsknoten der Sonotrode, also im Abstand von λ/4 zum Schweißbereich oder einem zu diesem benachbart verlaufenden Bereich. Benachbart verlaufender Bereich umfasst einen Abstand λ/4 ± 10 mm in Bezug auf den Schweißbereich. Die Sonotrode weist eine Länge N · λ/2 mit N = positive ganze Zahl auf.

Eine automatische axiale Ausrichtung der Sonotrode erfolgt, wenn der insbesondere im Schnitt eine Trapezgeometrie aufweisende Vorsprung in die entsprechend geometrisch angepasste Aussparung der Sonotrode eingreift. Durch die flächige Abstützung erfolgt gleichzeitig eine radiale Ausrichtung. Durch die diesbezüglichen Maßnahmen kann somit auf einfache Weise die Sonotrode in eine Aufnahme eingebracht und fixiert werden, die sodann in ein Gehäuse einer Ultraschallschweißvorrichtung eingebracht und z.B. über eine Schwalbenschwanzverbindung mit diesem verbunden wird, wie diese für Punktschweißanlagen bekannt ist. Insoweit wird auf eine Konstruktion verwiesen, wie diese der Ultraschallschweißvorrichtung des Typs DS20 II der Schunk Sonosystems GmbH, Wettenberg, Bundesrepublik Deutschland, zu entnehmen ist. Auf die diesbezügliche Konstruktion wird ausdrücklich verwiesen.

Insbesondere zeichnet sich die Erfindung dadurch aus, dass die Sonotrode eine Länge λ aufweist, dass in Längsrichtung betrachtet im Mittenbereich der Sonotrode der Schweißbereich verläuft, dass die erste Lagerung zu einer Seite des Schweißbereichs und eine zweite Lagerung in Abstand λ/4 zur anderen Seite des Schweißbereichs verläuft, wobei die zweite Lagerung insbesondere ein Kunststofflager ist. Dabei sollte die Sonotrode formschlüssig in der zweiten Lagerung abgestützt sein und sonotrodenseitig eine U-Form mit Seitenschenkeln aufweisen, deren innerer lichter Abstand öffnungsseitig gleich oder geringfügig größer als Querschnittsbreite der Sonotrode zwischen den Seitenschenkeln ist. Somit ist mit konstruktiv einfachen Maßnahmen ein Einsetzen der Sonotrode in das zweite Lager und ein Entfernen aus diesem möglich.

Die Erfindung zeichnet sich aber auch dadurch aus, dass die Sonotrode mit einem Booster verbunden sein kann, der in Längsrichtung der Sonotrode im Abstand ¾ λ von dem Schweißbereich oder dem an diesen angrenzenden Bereich in einer dritten Lagerung gelagert ist, bei dem es sich insbesondere um ein Kunststofflager vorzugsweise in Form eines Loslagers handelt. Dabei kann die dritte Lagerung aus zwei Teillagerelementen bestehen, die boosterseitig jeweils eine halbkreisförmige Aufnahme für den Booster aufweisen.

Insbesondere ist vorgesehen, dass die Abstützfläche der Sonotrode auf dem Vorsprung in Sonotrodenlängsachsenrichtung eine Länge L mit 1 mm ≤ L ≤ 10 mm und/oder eine Breite B mit 5 mm ≤ B ≤ 60 mm aufweist. Die Breite verläuft senkrecht zur Sonotrodenlängsachse. Die Höhe eines jeden Querschenkels senkrecht zur Sonotrodenlängsachse, also die Tiefe T_{S} der Ausnehmung, sollte betragen 1 mm ≤ T_{S} ≤ 5 mm. Der Winkel α zwischen Querschenkel und Seitenschenkel sollte betragen 90° ≤ α ≤ 150°.

Es zeigen:
- Fig. 1: eine Prinzipdarstellung einer Anordnung zum Schweißen von Metallen,
- Fig. 2: einen Ausschnitt einer Litzenschweißanlage,
- Fig. 3: einen Ausschnitt und in Schnittdarstellung einen Abschnitt einer der Fig. 2 zu entnehmenden Sonotrode,
- Fig. 4: einen Schwinger einer Punktschweißanlage,
- Fig. 5: eine Seitenansicht eines Schwingers mit einer λ-Sonotrode,
- Fig. 6: einen Schnitt entlang der Linie A-A in Fig. 5,
- Fig. 7: einen Schnitt entlang der Linie B-B in Fig. 5,
- Fig. 8: einen Schwinger mit λ-Sonotrode in Seitenansicht,
- Fig. 9: einen Schnitt entlang der Linie A-A in Fig. 8,
- Fig. 10: einen Schnitt entlang der Linie B-B in Fig. 8,
- Fig. 11: eine Seitenansicht eines Schwingers mit λ/2 Sonotrode und Booster,
- Fig. 12: einen Schnitt entlang der Linie A-A in Fig. 11 und
- Fig. 13: einen Schnitt entlang der Linie C-C in Fig. 11.

In den Figuren, in denen grundsätzlich für gleiche Elemente gleiche Bezugszeichen verwendet werden können, sind verschiedene Ausführungsformen von Sonotroden dargestellt, die erfindungsgemäß in einer ersten Lagerung abgestützt sind. Durch diese wird ein Einrichten bzw. Positionieren eines die Sonotrode umfassenden Schwingers auf einfache Weise ermöglicht, ohne dass aufwendige Justiermaßnahmen erforderlich sind. Die entsprechenden Schwinger werden in Ultraschwallschweißanlagen eingebaut, um Metallteile zu verschweißen, insbesondere um End- oder Durchgangsknoten von Litzen, Leitungen mit Kontakt oder elektrische Bauelemente wie IGBTs zu schweißen.

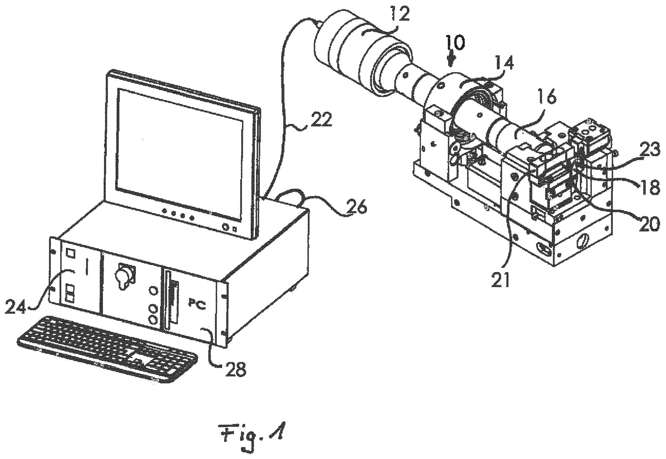

In Fig. 1 ist rein prinzipiell eine Ultraschallschweißanlage dargestellt, mit der Litzen zu einem Endknoten verschweißt werden sollen. Die Anlage umfasst eine Ultraschallschweißvorrichtung oder -maschine 10, die in gewohnter Weise einen Konverter 12 aufweist, die mit einem im Ausführungsbeispiel aus einem Booster 14 und einer Sonotrode 16 bestehenden Schwinger verbunden ist. Die Sonotrode 16 weist in ihrem im Schwingungsbauch verlaufenden Kopf 18 eine Schweißfläche auf, der eine Gegenelektrode 20 - auch Amboss genannt - sowie Seitenschieber 21, 23 zugeordnet sind, die insgesamt einen Verdichtungsraum umgeben.

Der Konverter 12 ist über eine Leitung 22 mit einem Generator 24 verbunden, der seinerseits über eine Leitung 26 an einen Rechner 28 angeschlossen ist, in den Schweißparameter bzw. Querschnitte der Materialien der zu verschweißenden Litzen eingegeben bzw. von dem entsprechend abgespeicherte Werte abgerufen werden können. Insoweit wird jedoch auf hinlänglich bekannte Ultraschallschweißanlagen aus dem Stand der Technik verwiesen.

Um reproduzierbar Schweißungen durchzuführen, ist eine exakte axiale und radiale Lagerung der Sonotrode erforderlich. Die Lagerung verläuft dabei im Schwingungsknoten der Sonotrode, also im Abstand von λ/4 von der Schweißfläche, die der Gegenelektrode zugeordnet und zwischen der und der Gegenelektrode die zu verschweißenden Materialien angeordnet werden. λ ist die Wellenlänge, mit der die Sonotrode bei Ultraschallerregung schwingt.

Der Abstand λ/4 schließt einen zu diesem benachbarten Bereich ein. Bei Sonotroden mit einer Länge λ kann der Abstand λ/4 ± 5 mm betragen. Bei Sonotroden einer Länge λ/2 kann der Abstand z. B. λ/4 ± 10 mm betragen.

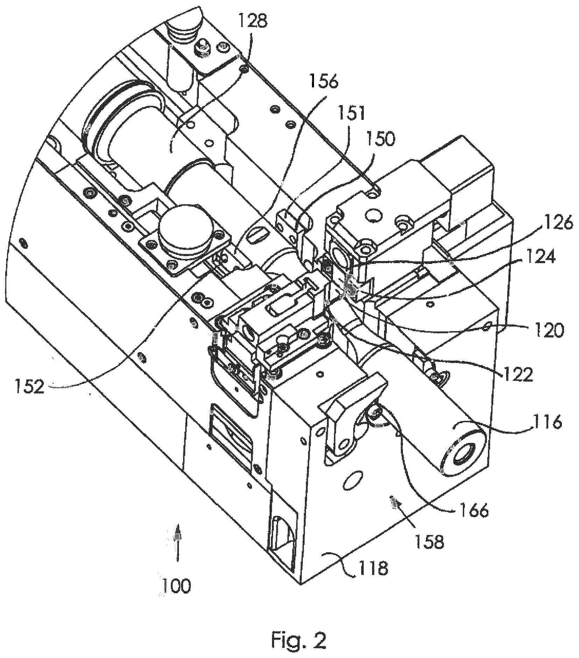

In Fig. 2 ist ein Ausschnitt einer Ultraschallschweißanlage 100 dargestellt, die eine Sonotrode 116 einer der Wellenlänge λ entsprechenden Länge λ aufweist und in einem Maschinenkörper 118 abgestützt gelagert ist, wie dies nachstehend näher erläutert wird. Die Sonotrode 116 weist im Mittenbereich eine Schweißfläche 120 auf, die einen Verdichtungsraum unterseitig begrenzt. Der Verdichtungsraum wird des Weiteren durch einen senkrecht zur Schweißfläche 120 verlaufenden Schieber 122, einer gegenüberliegenden Führung 124 eines parallel zur Schweißfläche 120 der Sonotrode 116 verschiebbaren und in dessen Richtung über die Führung 124 verstellbaren Amboss 126 begrenzt. Insoweit wird auf hinlänglich bekannte Konstruktionen verwiesen, wie diese auch in der EP 566 233 A1 beschrieben ist, auf deren Offenbarung ausdrücklich Bezug genommen wird.

Die Sonotrode 116 ist mit einem Booster 128 verbunden, der entsprechend der Darstellung der Fig. 1 von einem Konverter 12 ausgeht.

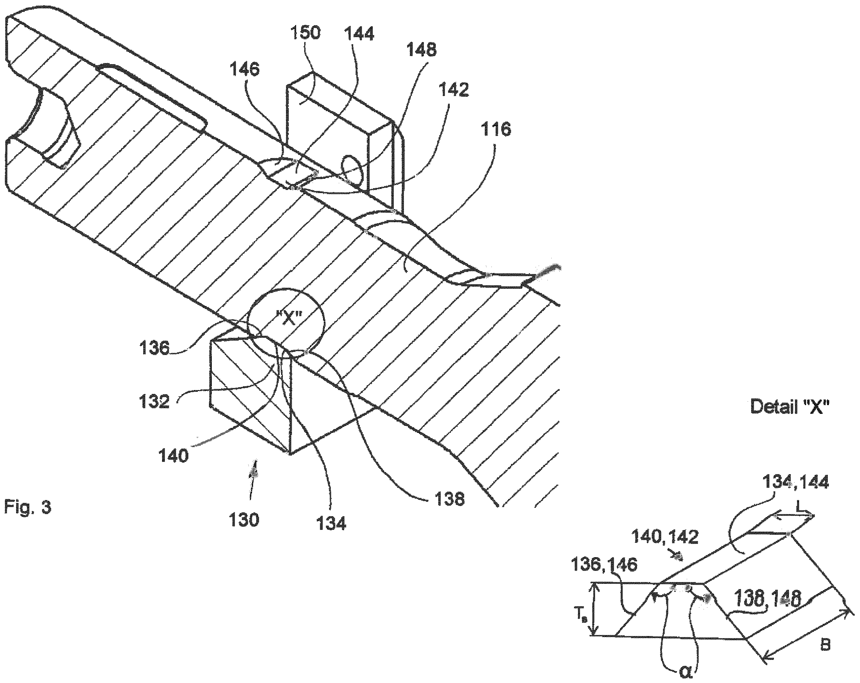

Die Lagerung für den aus der Sonotrode 116 und dem Booster 128 und Konverter 12 bestehenden Schwinger wird anhand der Fig. 3 und 5 - 7 näher erläutert.

Der Fig. 3 ist ein Ausschnitt der Sonotrode 116, im Längsschnitt dargestellt, zu entnehmen, und zwar im Bereich einer ersten Lagerung 130, die im Schwingungsknoten der Sonotrode 116 verläuft. Dabei stellt die erste Lagerung 130 die axiale und radiale Ausrichtung der Sonotrode 116 in der Ultraschallschweißanlage, d.h. den Maschinenkörper 118 und somit eine ordnungsgemäße Ausrichtung zu dem von dem Schieber 122 der Führung 124 und dem Amboss 126 begrenzten Verdichtungsraum sicher.

Wie sich aus der Darstellung der Fig. 3 ergibt, weist die erste Lagerung 130 einen im Schnitt trapezförmigen als Abstützung dienenden Vorsprung 132 auf, der eine parallel zur Längsachse der Sonotrode 116 verlaufende Grundfläche 134 und von dieser ausgehende quer zur Längsachse verlaufende Seitenflächen oder Flanken 136, 138 umfasst und in eine entsprechende Aussparung 140 der Sonotrode 116 eingreift. Die Aussparung 140 hat im Schnitt gleichfalls eine Trapezgeometrie, wie die der Aussparung 140 diametral gegenüberliegende Aussparung 142 verdeutlicht. Die entsprechenden Aussparungen 140, 142 sind vorhanden, um die Sonotrode 116 um ihre Längsachse drehen zu können, um dem Verdichtungsraum im gewünschten Umfang eine der Schweißflächen 120, 168 zuzuordnen, wie dies auch in der EP 1 566 233 A1 beschrieben worden ist.

Die Aussparung 140 wird anhand der Aussparung 142 näher erläutert. Wie der Schnittdarstellung zu entnehmen ist, weist die Aussparung 142 eine Grundfläche 144 und von dieser ausgehende Seitenflächen oder Flanken 146, 148 auf. Der Abstand der Flanken 146, 148 ist geringfügig größer als der Abstand der Flanken 136, 138 des Vorsprungs 132. Wird die Sonotrode 116 auf die erste Lagerung 130 aufgesetzt, so liegt die Grundfläche 140 des Vorsprungs 132 flächig auf der Grundfläche 144 der Aussparung 140 auf. Hierdurch erfolgt eine radiale Ausrichtung. Des Weiteren ist der Abstand der Flanken 146, 148 geringfügig größer als der der Flanken 136, 138, so dass zumindest eine der Flanken 146, 148 an eine der Flanken 136, 138 des Vorsprungs 132 anliegen kann, da die in der Zeichnung linken Flanken 136, 146 und entsprechend auch die rechten Flanken 138, 148 parallel zueinander verlaufen. Hierdurch erfolgt eine axiale Ausrichtung der Sonotrode 116.

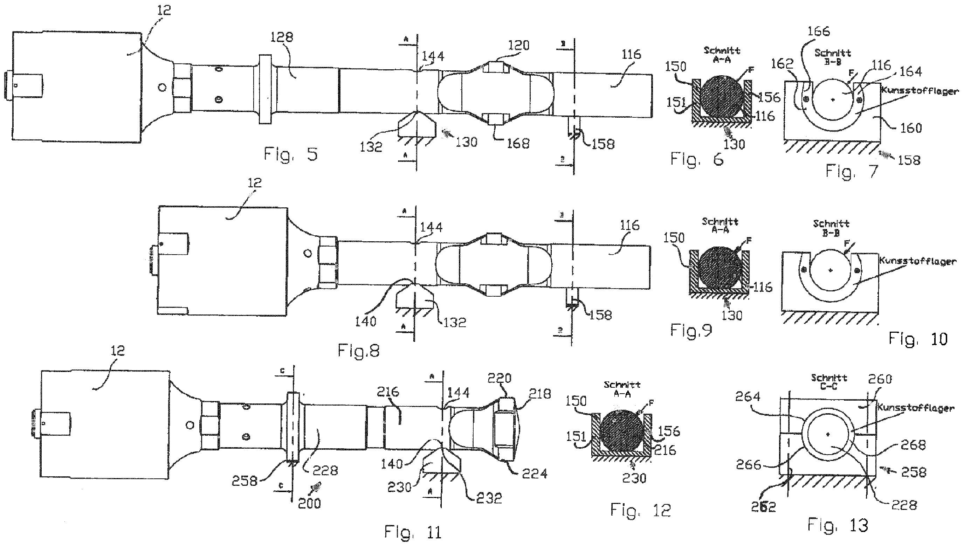

Die erste Lagerung 130 mit dem Vorsprung 132 ist im Ausführungsbeispiel Querschenkel einer U-förmigen Abstützung 150, wie sich auch aus den Fig. 6, 9 und 12 ergibt. Diesen ist auch zu entnehmen, dass die Sonotrode 116 gegen einen der Schenkel gedrückt und somit fixiert wird. Im Ausführungsbespiel der Fig. 2 wird die Sonotrode 116 gegen den Seitenschenkel 151 der U-förmigen Abstützung 150 gedrückt.

Das Druckelement kann z. B. eine Schraube sein und vom Maschinengrundkörper 118 ausgehen. Entsprechend der Fig. 2 ist das Druckelement ein Schraubelement 152, das den beabstandet zur Sonotrode 116 verlaufenden linken Seitenschenkel 156 der U-förmigen Abstützung 150 durchsetzt.

Der Abstand zwischen der Schweißfläche 120 und der ersten Lagerung 130 beträgt λ/4, wobei die erste Lagerung 130 im Schwingungsknoten der Sonotrode 116 und die Schweißfläche 120 im Schwingungsbauch verläuft.

Wie sich aus dem vergrößerten Ausschnitt der Fig. 3 ergibt, weist die Aussparung 140 und damit auch die Aussparung 142 bevorzugterweise folgende Dimensionierung auf. Die Grundfläche 134, 144 weist eine Länge L in Sonotrodenlängsrichtung vorzugsweise zwischen 1 mm und 10 mm auf. Die Breite der Grundfläche 134, 144, die senkrecht zur Sonotrodenlängsachse verläuft, sollte zwischen 5 mm und 60 mm liegen. Die Tiefe der Aussparung 140, 142 senkrecht zur Sonotrodenlängsachse sollte zwischen 1 mm und 5 mm liegen. Die Innenseite des jeweiligen Seitenschenkels oder Flanke 136, 138, 146, 148 sollte zur Grundfläche 134, 144 einen Winkel α zwischen 90° und 150° einschließen.

Das Material der ersten Lagerung 130 - wie auch in Bezug auf die weiteren nachstehend beschriebenen ersten Lagerungen 230, 330 - sollte aus Stahl, Gusseisen wie Grauguss, Gusseisen mit Kugelgraphit, Bronze, faserverstärktem Kunststoff, Keramik, kohlenstofffaserverstärktem Kohlenstoff oder anderen geeigneten Materialien bestehen, wobei die Materialien derart auszuwählen sind, dass im gewünschten Umfang eine Dämpfung erzielt wird. Auch soll eine hohe Verschleißfestigkeit gegeben sein.

Die Sonotrode 116 ist in Bezug auf die Schweißfläche 120 gegenüberliegend zu der ersten Lagerung 130 in einer zweiten Lagerung 158 abgestützt, die im Schnitt in Fig. 7 dargestellt ist. Bei der zweiten Lagerung 158 handelt es sich um ein Kunststofflager. Eine Abstützung 160 weist eine Kunststoffauskleidung 162 auf, die formschlüssig die Sonotrode 116 aufnimmt. Die Auskleidung 162 weist eine U-Geometrie mit Seitenschenkeln 164, 166 auf, deren lichter Abstand gleich oder geringfügig größer als die Querschnittsbreite der Sonotrode 116 ist, so dass mit einfachen Maßnahmen ein Einlegen bzw. Entfernen der Sonotrode 116 ermöglicht wird. Durch den Pfeil F wird gleichfalls erkennbar, dass die Sonotrode 116 eine Kraftbeaufschlagung in die zweite Lagerung 158 erfährt. Dies kann durch einen von dem Maschinenkörper 118 ausgehenden Schwenkhebel 166 verwirklicht werden. Die zweite Lagerung 158 verläuft gleichfalls im Abstand λ/4 von der Schweißfläche 120. Eine Abweichung von bis zu ± 10 mm, insbesondere bis zu ± 5 mm ist möglich.

Wie der Darstellung in Fig. 5 zu entnehmen ist, geht vom Mittelbereich der Sonotrode 116 gegenüberliegend zur Schweißfläche 120 eine weitere Schweißfläche 168 aus. Um diese zu nutzen, muss die Sonotrode 116 um 180° gedreht werden, so dass infolgedessen sodann in den trapezförmigen Vorsprung 132 der ersten Lagerung 130 die in der Figur gezeichnete obere Aussparung 144 in zuvor beschriebener Weise eingreift.

In den Fig. 8 - 10 ist gleichfalls ein λ-Schwinger dargestellt, der die Sonotrode 116 zuvor beschriebener Konstruktion und Lagerung aufweist. Die Sonotrode 116 geht jedoch unmittelbar vom Konverter 12 aus. Die erste und zweite Lagerung 130, 158 und die Zuordnung zu der Sonotrode 116 ist entsprechend zuvor erfolgter Beschreibung ausgebildet.

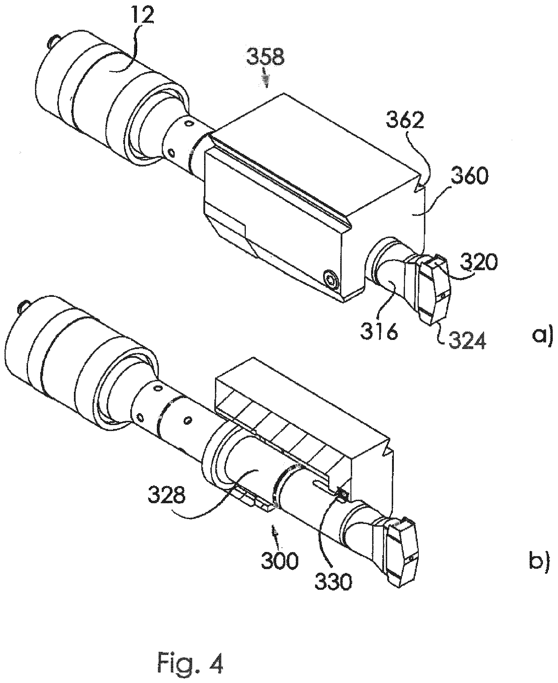

Den Fig. 4 und 11 - 13 ist ein Schwinger 200 zu entnehmen, der eine Sonotrode 216 einer Länge λ/2 sowie einen Booster 228 aufweist. Die Sonotrode 216 weist in bekannter Weise einen Sonotrodenkopf 218 mit im Ausführungsbeispiel zwei gleichmäßig um den Umfang verteilten Schweißflächen 220, 224 auf. Im Abstand λ/4 von den Schweißflächen 220, 224 bzw. der Stirnfläche des Sonotrodenkopfs 218, also unmittelbar benachbart zu den Schweißflächen 220, 224 ist eine Lagerung 230 vorgesehen, die der Lagerung 130 entspricht, so dass auf die diesbezüglichen Erläuterungen verwiesen wird. Die Sonotrode 216 weist entsprechend der Geometrie des Vorsprungs 232 Aussparungen 140, 144 auf.

Des Weiteren ist der Booster 228 in einer nachstehend als dritte Lagerung 258 bezeichneten Lagerung abgestützt, die im Schnitt in Fig. 13 dargestellt ist. Die dritte Lagerung 258 weist zwei Teillagerelemente 260, 262 auf, die jeweils eine halbkreisförmige Aussparung 264, 266 aufweisen, die mit einem aus Kunststoff bestehenden Ring 268 ausgekleidet sind, der den Booster 228 umgibt. Bei der dritten Lagerung 258 handelt es sich folglich um ein Kunststofflager in Form eines Loslagers.

Ist nach dem Ausführungsbeispiel der Fig. 11 die wirksame Schweißfläche die in der Zeichnung obere und mit dem Bezugszeichen 220 versehene, so ist in der Fig. 4 ein Schwinger 300 einer Punktschweißanlage dargestellt, bei der die wirksame Schweißfläche bodenseitig verläuft. Abweichend von der Darstellung der Fig. 11 - 13 ist der Schwinger 300, d.h. dessen Sonotrode 316 in der zeichnerischen Darstellung an der Oberseite abgestützt, d.h. die erste Lagerung 330 verläuft abweichend von dem Ausführungsbeispiel der Fig. 11 - 13 nicht an der Unterseite. Die als erste Lagerung 330 dienende Abstützung weist eine Stabform auf, und verläuft vertikal zur Längsrichtung der Sonotrodenlängsachse. Sonotrodenseitig weist die Abstützung im Schnitt die erforderliche Trapezgeometrie auf, um in eine geometrisch angepasste Aussparung der Sonotrode 316 einzugreifen, wie dies anhand der weiteren Ausführungsbeispiele erläutert worden ist.

Der Schwinger 300 wird entsprechend dem Ausführungsbeispiel der Fig. 11 - 13 zum einen über das erste Lager 330 und zum anderen über ein zweites Lager 358 im Bereich des Boosters 328 abgestützt. Die zweite Lagerung 358 entspricht der Lagerung 258 gemäß der Fig. 13. Die erste und zweite Lagerung 330, 358 sind in einem Umgehäuse 360 angeordnet, in das der Schwinger 300 einschiebbar ist, um in den Lagerungen 330, 358 fixiert zu werden.

Das Umgehäuse 360 weist eine einen Schwalbenschwanz bildende Begrenzung 362 auf, die in eine geometrisch angepasste Schwalbenschwanzaufnahme eines Gehäuses der Punktschweißanlage einschiebbar ist. Somit ist mit konstruktiv einfachen Maßnahmen der Schwinger 300 in die Punktschweißanlage einbringbar, wobei eine Nachjustierung des Schwingers 300 nicht erforderlich ist, da dieser aufgrund der erfindungsgemäßen Lehre radial und axial ausgerichtet ist.

Entsprechend der Fig. 11 ist die in der Fig. 4 dargestellte Sonotrode 316 im Abstand λ/4 von den Schweißflächen 320, 324 gelagert und weist eine Länge von λ/2 auf, wobei λ die Wellenlänge der Sonotrode 316 ist. Der Booster 328 weist gleichfalls eine Länge von λ/2 auf und ist im Abstand λ/2 von der ersten Lagerung 330 in der zweiten Lagerung 358 abgestützt.

## Patentansprüche

1. Ultraschallschweißvorrichtung mit einem Schwinger (100, 200, 300), umfassend eine Sonotrode (116, 216, 316), die mit einer Wellenlänge λ in Schwingung versetzbar ist und zumindest einen Schweißbereich (120, 168, 220, 224, 320, 324) im Schwingungsbauch der Sonotrode aufweist, wobei die Sonotrode in ihrem Schwingungsknoten in einer ersten Lagerung (130, 230, 330) abgestützt ist, welche einen Vorsprung (132) aufweist, der in einem in Längsrichtung der Sonotrode verlaufenden Schnitt eine U-förmige Geometrie mit Seitenschenkeln (136, 138) und diese verbindendem Querschenkel (140) aufweist, **dadurch gekennzeichnet, dass** der Vorsprung in eine der U-förmigen Geometrie angepasste Aussparung (140, 144) in der Sonotrode (116, 216, 316) eingreift,
dass die Sonotrode flächig auf dem Querschenkel des Vorsprungs abgestützt ist und
dass über zumindest einen Seitenschenkel des Vorsprungs eine axiale Ausrichtung der Sonotrode erfolgt.

2. Ultraschallschweißvorrichtung nach Anspruch 1,
**dadurch gekennzeichnet,**
**dass** der Vorsprung (132) eine Trapezgeometrie aufweist und insbesondere im Schnitt ein symmetrisches Trapez ist.

3. Ultraschallschweißvorrichtung nach Anspruch 1 oder 2,
**dadurch gekennzeichnet,**
**dass** bei in der Ultraschallschweißvorrichtung fixierter Sonotrode (116, 216, 316) diese flächig an einem der Seitenschenkel (136, 138) des Vorsprungs (132) anliegt.

4. Ultraschallschweißvorrichtung nach einem der vorhergehenden Ansprüche,
**dadurch gekennzeichnet,**
**dass** die erste Lagerung (130, 230, 330) eine quer zur Längsachse des Querschenkels (140) des Vorsprungs (132) und in Längsrichtung der Sonotrode (116, 216, 316) verlaufende Abstützung (150, 152) umfasst, gegen die die Sonotrode über eine auf diese einwirkende Kraft (F) drückbar ist.

5. Ultraschallschweißvorrichtung nach einem der vorhergehenden Ansprüche,
**dadurch gekennzeichnet,**
**dass** die Sonotrode (116) eine Sonotrode einer Länge λ ist, dass im Mittenbereich der zumindest eine Schweißbereich (120, 168) verläuft und dass die erste Lagerung (130) zu einer Seite des Schweißbereichs und eine zweite Lagerung (158) im Abstand λ/4 zu der anderen Seite des Schweißbereichs verläuft.

6. Ultraschallschweißvorrichtung nach einem der vorhergehenden Ansprüche,
**dadurch gekennzeichnet,**
**dass** die zweite Lagerung (158) ein Kunststofflager ist.

7. Ultraschallschweißvorrichtung nach einem der vorhergehenden Ansprüche,
**dadurch gekennzeichnet,**
**dass** die Sonotrode (116) formschlüssig in der zweiten Lagerung (158) abgestützt ist, die sonotrodenseitig eine U-Form mit Seitenschenkeln (162, 164) aufweist, deren innerer lichter Abstand öffnungsseitig gleich oder geringfügig größer als Querschnittsbreite der Sonotrode zwischen den Seitenschenkeln ist.

8. Ultraschallschweißvorrichtung nach einem der vorhergehenden Ansprüche,
**dadurch gekennzeichnet,**
**dass** die Sonotrode (116, 216) mit einem Booster (128, 228) verbunden ist, der in Längsrichtung der Sonotrode im Abstand ¾ λ von dem zumindest einen Schweißbereich (120, 168, 220, 224, 320, 324) in einer dritten Lagerung (258) gelagert ist.

9. Ultraschallschweißvorrichtung nach einem der vorhergehenden Ansprüche,
**dadurch gekennzeichnet,**
**dass** die dritte Lagerung (258) insbesondere ein Kunststofflager vorzugsweise in Form eines Loslagers ist.

10. Ultraschallschweißvorrichtung nach einem der vorhergehenden Ansprüche,
**dadurch gekennzeichnet,**
**dass** die dritte Lagerung (258) zwei Teillagerelement (260, 262) umfasst, die boosterseitig jeweils eine halbkreisförmige Aufnahme (260, 266) aufweisen, die mit Kunststoff ausgekleidet sind.

## Claims

1. An ultrasonic welding device with an oscillator (100, 200, 300), comprising a sonotrode (116, 216, 316) that can be put in oscillation with a wavelength λ and comprises at least one welding area (120, 168, 220, 224, 320, 334) in the antinode amplitude of the sonotrode, wherein the sonotrode is supported in its oscillating node in a first bearing (130, 230, 330) which comprises a projection (132) that has a U-shaped geometry with side shanks (136, 138) in a section running in the longitudinal direction of the sonotrode and has a cross shank (140) connecting them, **characterized in that**
the projection engages into a recess (140, 144) in the sonotrode (116, 216, 316) adapted to the U-shaped geometry,
that the sonotrode is supported flat on the cross shank of the projection,
and
that an axial alignment of the sonotrode takes place via at least one side shank of the projection.

2. The ultrasonic welding device according to Claim 1,
**characterized in that**
the projection (132) has a trapezoidal geometry and in particular is a symmetrical trapezoid in section.

3. The ultrasonic welding device according to Claim 1 or 2,
**characterized in that**
in the case of the sonotrode (116, 216, 316) fixed in the ultrasonic welding device this sonotrode rests flat on one of the side shanks (136, 138) of the projection (132).

4. The ultrasonic welding device according to one of the previous claims, **characterized in that**
the first bearing (130, 230, 330) comprises a support (150, 152) running transversely to the longitudinal axis of the cross shank (140) of the projection (132) and in the longitudinal direction of the sonotrode (116, 216, 316) against which support the sonotrode can be pressed by a force (F) acting on it.

5. The ultrasonic welding device according to one of the previous claims, **characterized in that**
the sonotrode (116) is a sonotrode with a length λ, that in its central area at least one welding area (120, 168) runs, and that the first bearing (130) runs on one side of the welding area and a second bearing (158) runs on the other side of the welding area at a distance of λ/4.

6. The ultrasonic welding device according to one of the previous claims, **characterized in that**
the second bearing (158) is a plastic bearing.

7. The ultrasonic welding device according to one of the previous claims, **characterized in that**
the sonotrode (116) is positively supported in the second bearing (158) that has on the sonotrode side a U-shape with side shanks (162, 164) whose inside clear distance on the opening side is equal to or slightly larger than the cross-sectional width of the sonotrode between the side shanks.

8. The ultrasonic welding device according to one of the previous claims, **characterized in that**
the sonotrode (116, 216) is connected to a booster (128, 228) that is supported in a third bearing (258) in the longitudinal direction of the sonotrode at a distance of ¾ λ from the at least one welding area (120, 168, 220, 224, 320, 324).

9. The ultrasonic welding device according to one of the previous claims, **characterized in that**
the third bearing (258) is in particular a plastic bearing preferably in the form of a loose bearing.

10. The ultrasonic welding device according to one of the previous claims, **characterized in that**
the third bearing (258) comprises two partial bearing elements (260, 262) that each comprise on the booster side a semicircular receptacle (260, 266) that are lined with plastic.

## Revendications

1. Dispositif de soudage par ultrasons avec un transducteur (100, 200, 300), comprenant une sonotrode (116, 216, 316) qui peut être mise en vibration sous une longueur d'onde λ et présente au moins une zone de soudage (120, 168, 220, 224, 320, 324) dans le ventre de vibration de la sonotrode, sachant que la sonotrode dans son noeud de vibration prend appui sur un premier palier (130, 230, 330) muni d'une partie saillante (132) qui, dans une coupe s'étendant dans le sens longitudinal de la sonotrode, présente une géométrie en U avec des branches latérales (136, 138) reliées par une branche transversale (140),
**caractérisé en ce**
**que** la partie saillante s'engage dans la sonotrode (116, 216, 316) dans un évidement (140, 144) adapté à la géométrie en U, que la sonotrode s'appuie à plat sur la branche transversale de la partie saillante et qu'un alignement axial est obtenu par le biais d'au moins une branche latérale de la partie saillante.

2. Dispositif de soudage par ultrasons selon la revendication 1,
**caractérisé en ce**
la partie saillante (132) présente une géométrie trapézoïdale et est en particulier un trapèze symétrique en coupe transversale.

3. Dispositif de soudage par ultrasons selon la revendication 1 ou 2, **caractérisé en ce**
**que** la sonotrode (116, 216, 316) fixée dans le dispositif de soudage par ultrasons s'appuie à plat sur l'une des branches latérales (136, 138) de la partie saillante (132).

4. Dispositif de soudage par ultrasons selon l'une des revendications précédentes, **caractérisé en ce**
**que** le premier palier (130, 230, 330) comprend un support (150, 152) s'étendant transversalement à l'axe longitudinal de la branche transversale (140) de la partie saillante (132) et dans le sens longitudinal de la sonotrode (116, 216, 316), et contre lequel la sonotrode peut être pressée par une force (F) agissant sur elle.

5. Dispositif de soudage par ultrasons selon l'une des revendications précédentes, **caractérisé en ce**
**que** la sonotrode (116) est une sonotrode d'une longueur λ, que dans la zone médiane s'étend l'au moins une zone de soudage (120, 168), que le premier palier (130) s'étend d'un côté de la zone de soudage et un deuxième palier (158) s'étend de l'autre côté de la zone de soudage à une distance égale à λ/4.

6. Dispositif de soudage par ultrasons selon l'une des revendications précédentes, **caractérisé en ce**
**que** le deuxième palier (158) est un palier en matière synthétique.

7. Dispositif de soudage par ultrasons selon l'une des revendications précédentes, **caractérisé en ce**
**que** la sonotrode (116) est fixée par complémentarité de forme dans le deuxième palier (158) qui présente du côté de la sonotrode une forme en U avec des branches latérales (162, 164) dont l'écartement intérieur du côté de l'ouverture est égal ou légèrement supérieur à la largeur de la section transversale de la sonotrode entre les branches latérales.

8. Dispositif de soudage par ultrasons selon l'une des revendications précédentes, **caractérisé en ce**
**que** la sonotrode (116. 216) est reliée à un booster (128, 228) qui, dans le sens longitudinal de la sonotrode, est logé dans un troisième palier (258) à une distance de l'au moins une zone de soudage (120, 168, 220, 224, 320, 324) égale à ¾ λ.

9. Dispositif de soudage par ultrasons selon l'une des revendications précédentes, **caractérisé en ce**
**que** le troisième palier (258) est en particulier un palier en matière synthétique, de préférence sous la forme d'un palier libre.

10. Dispositif de soudage par ultrasons selon l'une des revendications précédentes, **caractérisé en ce**
**que** le troisième palier (258) comprend deux éléments de palier partiels (260, 262) qui présentent chacun du côté booster un logement en demi-cercle (260, 266) revêtu de matière synthétique.
